# EUROPEAN PATENT APPLICATION

(11) **EP 4 015 326 A1**
(43) Date of publication of application: **22.06.2022**
(21) Application number: 20214110.7
(22) Date of filing: 15.12.2020
(51) Int. Cl.: B60W 10/20, B60W 30/09, B60W 30/18, B60Q 5/00

(54) **VEHICLE CONTROL SYSTEM, VEHICLE AND METHOD**

(71) Applicant: Vestel Elektronik Sanayi ve Ticaret A.S., 45030 Manisa (TR)
(72) Inventor: ÖZVURAL, Görkem, 45030 Manisa (TR)
(74) Representative: Kehl, Ascherl, Liebhoff & Ettmayr Patentanwälte Partnerschaft mbB

(57) **Abstract**

The present invention provides a vehicle control system (100, 200, 300) comprising a first presence sensor (101, 201, 301) configured to sense the presence and movement of a front-positioned vehicle (190, 290, 390, 490) in front of the vehicle (208, 308, 408), and a vehicle movement controller (103, 203, 303) that is coupled to the first presence sensor (101, 201, 301) and that is configured to determine based on data provided by the first presence sensor (101, 201, 301) a change in the distance (104, 204, 304, 311) between the vehicle (208, 308, 408) and the front-positioned vehicle (190, 290, 390, 490) while the vehicle (208, 308, 408) is stopped, and that is configured to control the vehicle (208, 308, 408) to move backwards if the distance (104, 204, 304, 311) between the vehicle (208, 308, 408) and the front-positioned vehicle (190, 290, 390, 490) decreases below a predetermined threshold (105, 205, 305, 405). Further, the present invention provides a respective vehicle (208, 308, 408) and a respective method.

## Description

### TECHNICAL FIELD

The invention relates to a vehicle control system, and a respective vehicle and a respective method.

### BACKGROUND

Although applicable to any type of vehicle, the present invention will mainly be described in conjunction with automobiles.

Modern automobiles may provide the driver with a plurality of different driver assistance systems. Such driver assistance systems may support the driver in driving the vehicle.

There exist different types of driver assistance systems, such as systems that provide more comfort to the driver, and systems that increase the safety of the vehicle.

However, there exist driving situations where no assistance system supports the driver of a vehicle.

Accordingly, there is a need for providing improved driver assistance systems.

### SUMMARY OF THE INVENTION

The above stated problem is solved by the features of the independent claims. It is understood, that independent claims of a claim category may be formed in analogy to the dependent claims of another claim category.

Accordingly, it is provided:
A vehicle control system comprising a first presence sensor configured to sense the presence and movement of a front-positioned vehicle in front of the vehicle, and a vehicle movement controller that is coupled to the first presence sensor and that is configured to determine based on data provided by the first presence sensor a change in the distance between the vehicle and the front-positioned vehicle while the vehicle is stopped, and that is configured to control the vehicle to move backwards if the distance between the vehicle and the front-positioned vehicle decreases below a predetermined threshold.

Further, it is provided:
A vehicle comprising a vehicle control system according to the present invention.

Further, it is provided:
A method for controlling a vehicle, the method comprising sensing the presence and movement of a front-positioned vehicle in front of the vehicle and providing respective first data, determining based on the first data a change in the distance between the vehicle and the front-positioned vehicle while the vehicle is stopped, and controlling the vehicle to move backwards if the distance between the vehicle and the front-positioned vehicle decreases below a predetermined threshold.

The present invention is based on the finding that drivers of vehicles usually are surprised if they stopped their vehicle and the vehicle in front of their own vehicle suddenly rolls back. This may happen e.g., on an inclined road, especially at a traffic light or a stop sign or the like. The present invention tries to provide the drivers of vehicles with a system that supports them in such situations.

The vehicle control system comprises a first presence sensor. The first presence sensor serves for detecting another vehicle in front of the vehicle. In this context the other vehicle will be called the front-positioned vehicle.

The first presence sensor detects or senses the presence of a front-positioned vehicle. If a front-positioned vehicle is present in front of the vehicle, the first presence sensor may continually determine the movement of the front-positioned vehicle. If no front-positioned vehicle is present or the front-positioned vehicle is out of range of the first presence sensor, the presence sensor may provide this information to the vehicle movement controller.

The information about the front-positioned vehicle is provided from the first presence sensor to the vehicle movement controller. The vehicle movement controller based on the information provided by the first presence sensor determines if the distance between the front-positioned vehicle and the vehicle changes, especially if the distance decreases. The vehicle movement controller performs this determination while the vehicle is stopped. If the front-positioned vehicle approaches the vehicle while the vehicle is stopped, it is obvious that the front-positioned vehicle is moving backwards. The vehicle movement controller may receive the information about the movement of the vehicle e.g. via a data bus of the vehicle. Usually, systems like an electronic stability program may provide the information about the vehicle speed on a vehicle bus for all other vehicle systems.

Consequently, if the distance between the front-positioned vehicle and the vehicle is reduced below a predetermined threshold, the vehicle movement controller controls the vehicle to move backwards, i.e. away from the front-positioned vehicle.

The present invention allows preventing a crash in a situation where a driver stopped his vehicle in a row with other vehicles, e.g. at a red traffic light, and the front-positioned vehicle suddenly reverses. This may happen at inclined roads e.g., because of a defect of the braking system of the front-positioned vehicle or simply because the driver of the front-positioned vehicle does not use the brake correctly.

The crash is prevented by the vehicle control system by reversing the vehicle itself and, therefore, evading the front-positioned vehicle.

Further embodiments of the present invention are subject of the further subclaims and of the following description, referring to the drawings.

In an embodiment, the first presence sensor may comprise a number, i.e. one or more, of ultrasound distance sensors.

Modern vehicles are usually equipped with parking distance sensors. Usually, ultrasound-based sensors are used as distance sensors in parking distance control systems. The vehicle control system may in such a vehicle be combined with a parking distance control system and the ultrasound sensor may be used for both systems.

Ultrasound sensors are limited regarding the maximum distance and may therefore be used especially in a range of centimeters to one or two or three meters.

In another embodiment, the first presence sensor may comprise a camera-based distance sensor and/or a LIDAR sensor and/or a RADAR sensor.

The vehicle control system may as alternative to the ultrasound sensors or in addition to the ultrasound sensors also use other sensor types, like e.g. camera-based distance sensors, LIDAR sensors or RADAR sensors.

Camera-based distance sensors, LIDAR sensors or RADAR sensors are capable of detecting objects in a larger range-spectrum than ultrasound sensors and may therefore be used to identify a vehicle that is reverse-driving earlier than with ultrasound sensors.

As with ultrasound sensors, camera-based distance sensors, LIDAR sensors or RADAR sensors may be present in a vehicle for other driver assistance systems, like e.g. a lane assist, a distance control or the like. Therefore, the vehicle control system may share such sensors with such driver assistance systems.

In a further embodiment, the vehicle control system may comprise a second presence sensor configured to sense the presence and movement of a rear-positioned vehicle and/or an object behind the vehicle, wherein the second presence sensor is coupled to the vehicle movement controller, and wherein the vehicle movement controller is configured to determine the distance between the vehicle and the rear-positioned vehicle and/or the object based on data from the second presence sensor and to stop the backwards movement of the vehicle if the distance is lower than a predetermined safety margin.

The second presence sensor may be analogous to the first presence sensor, but oriented to the back of the vehicle. In the back of the vehicle different objects or other vehicles may be present. The second presence sensor therefore serves to prevent accidents that may be caused by the reverse or backwards movement of the vehicle.

To this end, the second presence sensor provides data about the sensed objects to the vehicle movement controller. The vehicle movement controller may then stop a backwards movement of the vehicle if an object is detected and the distance between the vehicle and the object is lower than the predetermined safety margin, e.g. below 50cm, or below 40cm, 30cm , 20cm, or 10cm.

In another further embodiment, the second presence sensor may comprise a number, i.e. one or more, of ultrasound distance sensors and/or a camera-based distance sensor and/or a LIDAR sensor and/or a RADAR sensor.

The second presence sensor may comprise the same type of sensors as the first presence sensor. It is understood, that the second presence sensor may also be part of another vehicle system, especially of any one of the driver assistance systems in the vehicle.

It is generally understood, that the vehicle control system may be embedded in or combined with the control systems in the vehicle. Therefore, the vehicle control system may comprise an electronic control unit that comprises a controller, like e.g. a microcontroller, a processor, an ASIC, a FPGA or the like. Further, the electronic control unit may comprise a memory that stores computer readable instructions that when executed by the controller perform the required functions for the vehicle control system. In addition, such an electronic control unit may also comprise digital data interfaces, like e.g. bus or network interfaces for communication with other elements of the vehicle control system or other electronic systems in the vehicle.

With such a setup, at least some of the functions of the vehicle control system may be performed by other vehicle systems. For example, instead of providing dedicated presence sensors for the vehicle control system, the respective information or data may be provided to the vehicle control system from a parking distance control system via a data bus or network in the vehicle. The parking distance control system may comprise any type of sensor that is adequate for sensing the presence of objects or other vehicles near the vehicle. The information provided to the vehicle control system may comprise raw sensor data that may then be processed in the vehicle control system. As alternative, or in addition, the data provided to the vehicle control system may also comprise pre-processed data that is already processed by the other vehicle system, e.g. the parking distance control system. Such data may comprise e.g., information about the object that is detected and the distance between the vehicle and the object, instead of raw sensor data.

Other systems that may provide such data may include but are not limited to vehicle systems that at least partially operate the vehicle, e.g. automatic cruise control systems that control the distance of the vehicle to the preceding vehicle while driving, or systems that allow autonomous driving of the vehicle.

In an embodiment, the vehicle movement controller may be provided as program or computer readable instructions that are integrated into the programming of another vehicle system as a function or component that is added to that other vehicle system. In such an embodiment, the vehicle movement controller makes use of the resources already present in a vehicle. The vehicle control system may therefore be implemented with little additional effort.

In an embodiment, the movement controller may comprise a steering controller that is configured to control the steering of the vehicle, wherein the steering controller is configured to control the vehicle during a backwards movement of the vehicle, that is initiated by the vehicle movement controller, to swerve to avoid the rear-positioned vehicle and/or object if a rear-positioned vehicle and/or object is detected behind the vehicle.

The steering controller may e.g. be provided as an additional function, e.g. as respective program instructions, that perform the calculation of the steering that is required to swerve the vehicle, the acceleration and the like. Such a steering controller may be combined with other vehicle systems that already comprise the hardware required for steering and accelerating/decelerating the vehicle. Such systems may include the engine ECU for accelerating/decelerating the vehicle and a lane assist system that is capable of steering the vehicle, another such system may be an automatic parking system that is capable of reversing the vehicle and at the same time steer the vehicle to leave the lane, in which the vehicle is standing, to the left or to the right. With such an automatic parking system, the steering controller may simply instruct the parking system to perform such an evasive action, which to the parking system is almost the same as a parking action. The steering controller in this embodiment does not have to perform any further computations and may leave the further control of the vehicle to the automatic parking system. It is understood, that the parking system is just an exemplary system that may control the vehicle. The steering controller may operate with any other capable vehicle system. The steering controller may communicate with any of such vehicle systems via a data bus or network of the vehicle to provide the required instructions to the vehicle system.

It is understood, that in other embodiments, the steering controller may also comprise the required functionality to directly control the steering and acceleration/deceleration of the vehicle.

It is understood, that the evasive movement of the vehicle may be combined with respective monitoring of the space the vehicle is moving into. Therefore, RADAR sensors, cameras, ultrasound sensors or the like may be used to monitor the rear and front sides of the vehicle.

The steering controller may further be configured to perform the evasive movement in the direction of the roadside and not into the direction of a parallel or the opposite driving lane. The steering controller may e.g. determine in which country the vehicle is driving, e.g. via a data connection to a navigation or GPS system in the vehicle and determine, which side is the roadside. In addition, or as alternative, a camera based computer vision system may be used to identify the roadside. Further, such a system may also be used for the first and second presence sensors.

In a further embodiment, the vehicle control system may comprise an alarm device that is coupled to the vehicle movement controller, wherein the vehicle movement controller is configured to activate the alarm device if the distance between the vehicle and the front-positioned vehicle decreases below the predetermined threshold.

The alarm device may include e.g., the horn and/or the lights, especially the front lights, of the vehicle. With the alarm device it is possible to bring to the attention of the driver of the front-positioned vehicle that a crash may be imminent. The driver of the front-positioned vehicle may then react and use the brakes or perform evasive steering of the front-positioned vehicle.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a vehicle control system according to the present invention,
Fig. 2 shows a diagram of an embodiment of a vehicle according to the present invention,
Fig. 3 shows vehicles on a street, wherein one of the vehicles is a vehicle according to the present invention.
Fig. 4 also shows vehicles on a street, wherein one of the vehicles is a vehicle according to the present invention.
Fig. 5 shows a flow diagram of an embodiment of a method according to the present invention.

In the figures like reference signs denote like elements unless stated otherwise.

### DETAILED DESCRIPTION OF THE DRAWINGS

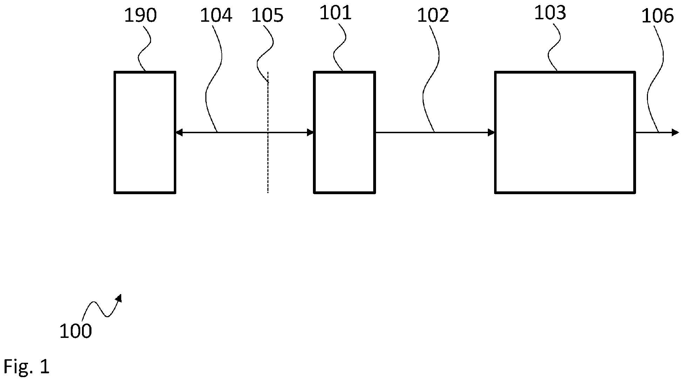

Fig. 1 shows a block diagram of a vehicle control system 100. The vehicle control system 100 comprises a first presence sensor 101 that is coupled to a vehicle movement controller 103.

The first presence sensor 101 senses the presence and movement of a front-positioned vehicle 190 in front of the vehicle in which the vehicle control system 100 is arranged. The term front-positioned vehicle 190 in this regard refers to a vehicle that is positioned in driving direction in front of the vehicle in which the vehicle control system 100 is arranged.

The vehicle movement controller 103 receives first data 102 from the first presence sensor 101. The first data 102 may be raw sensor data or the first data 102 may be preprocessed data that already indicates a distance 104 between the vehicle in which the vehicle control system 100 is arranged and a front-positioned vehicle 190.

The vehicle movement controller 103 determines based on the first data 102 a change in the distance 104 between the vehicle in which the vehicle control system 100 is arranged and the front-positioned vehicle 190 while the vehicle in which the vehicle control system 100 is arranged is stopped. The vehicle movement controller 103 especially determines if the distance 104 between the vehicle in which the vehicle control system 100 is arranged and the front-positioned vehicle 190 decreases below a predetermined threshold 105. If this is the case, the vehicle movement controller 103 controls the vehicle in which the vehicle control system 100 is arranged to move backwards.

This backwards movement prevents a crash from happening that would otherwise have happened because of the backwards movement of the front-positioned vehicle 190.

It is understood, that the first presence sensor 101 may comprise any one of different adequate types of sensors. For example, the first presence sensor 101 may comprise a number, i.e. one or more, of ultrasound distance sensors, camera-based distance sensors, LIDAR sensors, and/or RADAR sensors.

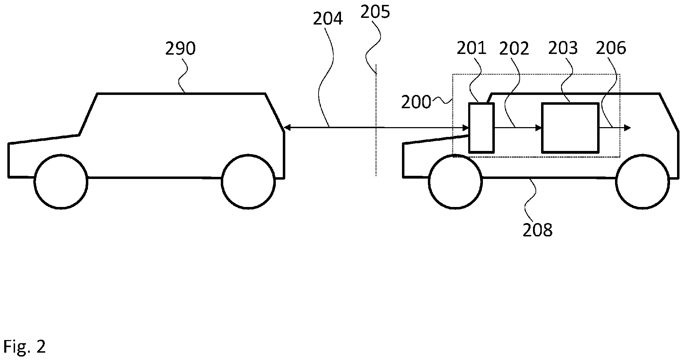

Fig. 2 shows a diagram of a vehicle 208. The vehicle 208 comprises a vehicle control system 200, for example a vehicle control system as shown in Fig. 1. The vehicle control system 200 comprises a first presence sensor 201 that is coupled to a vehicle movement controller 203. The vehicle movement controller 203 may control the vehicle 208 by providing respective control data 206, e.g. to an engine control system of the vehicle 208.

In front of the vehicle 208 another, a front-positioned vehicle 290 is shown. The first presence sensor 201 measures the distance 204 between the vehicle 208 and the front-positioned vehicle 290 and provides the respective first data 202 to the vehicle movement controller 203.

The vehicle movement controller 203 determines if the distance 204 falls below the predetermined threshold value 205. The threshold value 205 may be a fixed threshold value, e.g. a value of 1 m, 80 cm, 50 cm or less. As alternative, the threshold value 205 may be a variable threshold value. The threshold value 205 may e.g. be adapted by the vehicle movement controller 203 according to the speed of movement of the front-positioned vehicle 290. The faster the front-positioned vehicle 290 moves towards the vehicle 208, the larger the threshold value 205 may be set.

It can be seen, that a vehicle 208 with a vehicle control system 200 may perform evasive movements, if a front-positioned vehicle 290 suddenly moves backwards. Therefore, a crash may be effectively prevented.

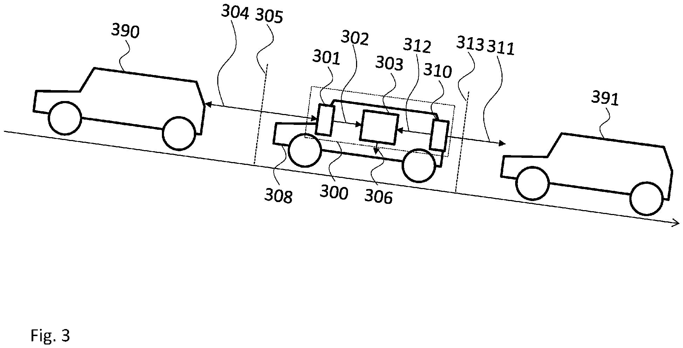

Fig. 3 shows vehicles on an inclined street. Vehicle 308 is based on vehicle 208. Therefore, vehicle 308 comprises a vehicle control system 300. The vehicle control system 300 comprises a first presence sensor 301 that is coupled to a vehicle movement controller 303. The vehicle movement controller 303 may control the vehicle 308 by providing respective control data 306, e.g. to an engine control system of the vehicle 308.

In contrast to the vehicle control system 100 and the vehicle control system 200, the vehicle control system 300 further comprises a second presence sensor 310 that is coupled to the vehicle movement controller 303 and provides respective second data 312 to vehicle movement controller 303. The second presence sensor 310 is oriented towards the back of the vehicle 308 and identifies and/or measures the distance to objects and/or vehicles in the back of the vehicle 308. A vehicle that is positioned behind the vehicle 308 may be called a rear-positioned vehicle 391.

The vehicle movement controller 303 of vehicle 308 determines the distance 311 between the vehicle 308 and the rear-positioned vehicle 391 based on data from the second presence sensor 310. It is understood, that instead of a rear-positioned vehicle 391 any other object may be present and may be assessed by the second presence sensor 310. The vehicle movement controller 303 will stop the backwards movement of the vehicle 308 if the distance 311 is lower than a predetermined safety margin 313.

As explained above, for the threshold value 205, the safety margin 313 may be a fixed margin, e.g. with a value of 1 m, 80 cm, 50 cm or less. As alternative, the safety margin 313 may be a variable margin. The safety margin 313 may e.g. be adapted by the vehicle movement controller 303 according to the speed of movement of the vehicle 308. The faster the vehicle 308 moves towards the rear-positioned vehicle 391, the larger the safety margin 313 may be set.

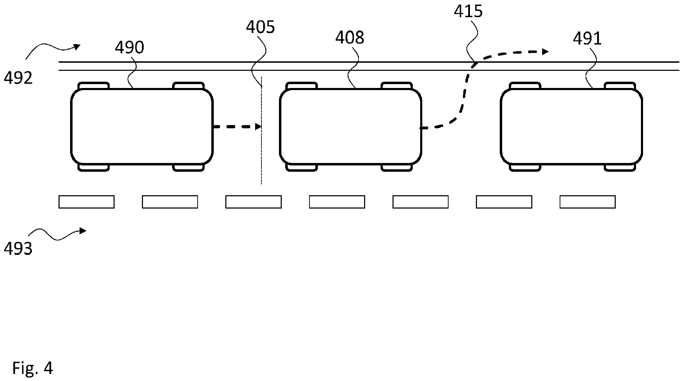

In an embodiment, the vehicle movement controller 303 may comprise a steering controller (not explicitly shown). The steering controller may control the steering of the vehicle 308, especially while the vehicle 308 is controlled by the vehicle movement controller 303 to drive backwards. The steering controller may in such a case control the vehicle to swerve to avoid a collision with the rear-positioned vehicle 391 and/or any other object. This embodiment will be exemplified in more detail in Fig. 4.

Further, the vehicle control system 300 may comprise an alarm device (not explicitly shown) that is coupled to the vehicle movement controller 303. The vehicle movement controller 303 may activate the alarm device, e.g. the horn of vehicle 308, if the distance 304 between the vehicle 308 and the front-positioned vehicle 390 decreases below the predetermined threshold 305. It is understood, that this measure may already be initiated before the distance 304 decreases below the predetermined threshold value 305.

Fig. 4 shows three vehicles 490, 408, 491 on an inclined street in a top view. The center vehicle 408 is a vehicle like vehicle 308 as shown in Fig. 3. In front of vehicle 408 a front-positioned vehicle 490 is present and behind vehicle 408 a rear-positioned vehicle 491 is provided.

If now front-positioned vehicle 490 starts rolling backwards, the vehicle control system of vehicle 408 will detect this movement. In case that the distance falls below the threshold value 405, the vehicle control system of vehicle 408 will initiate a backwards movement of the vehicle 408.

Since the second presence sensor in vehicle 408 will detect the rear-positioned vehicle 491, the vehicle control system will in addition to a backwards movement also initiate a steering of the vehicle 408 to prevent an accident between the vehicle 408 and the rear-positioned vehicle 491.

In Fig. 4 the vehicles 490, 408, 491 are standing on the right lane of a street between the left lane 493 and the roadside 492. The steering movement therefore steers the vehicle 408 towards the roadside 492 and not the left lane 493, where other vehicles could be driving.

It is understood, that the direction of steering may depend on the country, in which the vehicle 408 is moving, since there exists left-hand traffic (LHT) and right-hand traffic (RHT), depending on the different countries' regulations.

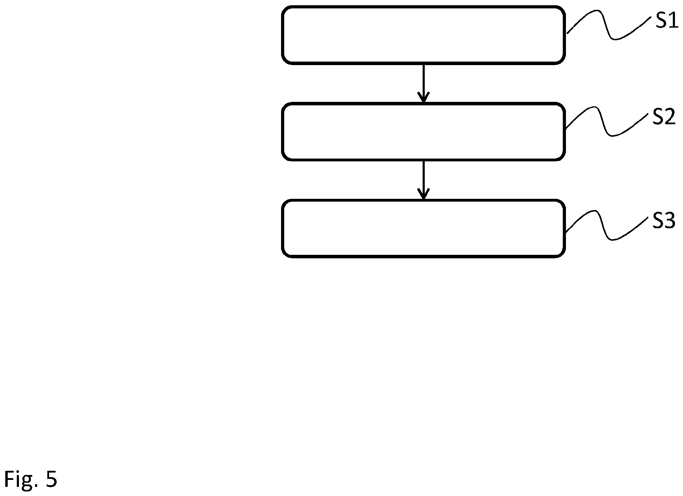

For sake of clarity in the following description of the method-based Fig. 5 the reference signs used above in the description of apparatus-based Figs. 1 - 4 will be maintained.

Fig. 5 shows a flow diagram of a method for controlling a vehicle 208, 308, 408.

The method comprises sensing S1 the presence and movement of a front-positioned vehicle 190, 290, 390, 490 in front of the vehicle 208, 308, 408 and providing respective first data 102, 202, 302, determining S2 based on the first data 102, 202, 302 a change in the distance 104, 204, 304, 311 between the vehicle 208, 308, 408 and the front-positioned vehicle 190, 290, 390, 490 while the vehicle 208, 308, 408 is stopped, and controlling S3 the vehicle 208, 308, 408 to move backwards if the distance 104, 204, 304, 311 between the vehicle 208, 308, 408 and the front-positioned vehicle 190, 290, 390, 490 decreases below a predetermined threshold 105, 205, 305, 405.

The method may also comprise activating an alarm device of the vehicle 208, 308, 408 if the distance 104, 204, 304, 311 between the vehicle 208, 308, 408 and the front-positioned vehicle 190, 290, 390, 490 decreases below the predetermined threshold 105, 205, 305, 405.

In an embodiment, sensing S1 may comprise sensing the presence and movement with a number of ultrasound distance sensors, camera-based distance sensors, LIDAR sensors and/or RADAR sensors.

Further, the method may comprise sensing the presence and movement of a rear-positioned vehicle 391, 491 and/or an object behind the vehicle 208, 308, 408 and providing respective second data 312. Based on this second data 312, the distance 311 between the vehicle 208, 308, 408 and the rear-positioned vehicle 391, 491 and/or the object may be determined. If this distance 311 is lower than a predetermined safety margin 313, the backwards movement of the vehicle 208, 308, 408 may be stopped.

It is understood, that sensing the presence and movement of a rear-positioned vehicle 391, 491 and/or an object may be performed with a number of ultrasound distance sensors and/or a camera-based distance sensor and/or a LIDAR sensor and/or a RADAR sensor.

The method may further comprise controlling the vehicle 208, 308, 408 during a backwards movement of the vehicle 208, 308, 408, that is initiated if the distance 104, 204, 304, 311 between the vehicle 208, 308, 408 and the front-positioned vehicle 190, 290, 390, 490 decreases below a predetermined threshold 105, 205, 305, 405, to swerve to avoid the rear-positioned vehicle 391, 491 and/or object if a rear-positioned vehicle 391, 491 and/or object is detected behind the vehicle 208, 308, 408.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### List of reference signs

- 100, 200, 300: vehicle control system
- 101, 201, 301: first presence sensor
- 102, 202, 302: first data
- 103, 203, 303: vehicle movement controller
- 104, 204, 304, 311: distance
- 105, 205, 305, 405: predetermined threshold
- 106, 206, 306: control data

- 208,308,408: vehicle

- 310: second presence sensor
- 311: distance
- 312: second data
- 313: safety margin

- 415: trajectory

- 190, 290, 390, 490: front-positioned vehicle
- 391, 491: rear-positioned vehicle

- 492: roadside
- 493: driving lane

- S1, S2, S3: method steps

## Claims

1. Vehicle control system (100, 200, 300) comprising:
a first presence sensor (101, 201, 301) configured to sense the presence and movement of a front-positioned vehicle (190, 290, 390, 490) in front of the vehicle (208, 308, 408),
a vehicle movement controller (103, 203, 303) that is coupled to the first presence sensor (101, 201, 301) and that is configured to determine based on first data provided by the first presence sensor (101, 201, 301) a change in the distance (104, 204, 304, 311) between the vehicle (208, 308, 408) and the front-positioned vehicle (190, 290, 390, 490) while the vehicle (208, 308, 408) is stopped, and that is configured to control the vehicle (208, 308, 408) to move backwards if the distance (104, 204, 304, 311) between the vehicle (208, 308, 408) and the front-positioned vehicle (190, 290, 390, 490) decreases below a predetermined threshold (105, 205, 305, 405).

2. Vehicle control system (100, 200, 300) according to the preceding claim, wherein the first presence sensor (101, 201, 301) comprises a number of ultrasound distance sensors.

3. Vehicle control system (100, 200, 300) according to any one of the preceding claims, wherein the first presence sensor (101, 201, 301) comprises a camera-based distance sensor and/or a LIDAR sensor and/or a RADAR sensor.

4. Vehicle control system (100, 200, 300) according to any one of the preceding claims, comprising a second presence sensor (310) configured to sense the presence and movement of a rear-positioned vehicle (391, 491) and/or an object behind the vehicle (208, 308, 408),
wherein the second presence sensor (310) is coupled to the vehicle movement controller (103, 203, 303), and
wherein the vehicle movement controller (103, 203, 303) is configured to determine the distance (311) between the vehicle (208, 308, 408) and the rear-positioned vehicle (391, 491) and/or the object based on data from the second presence sensor (310) and to stop the backwards movement of the vehicle (208, 308, 408) if the distance (311) is lower than a predetermined safety margin (313).

5. Vehicle control system (100, 200, 300) according to the preceding claim, wherein the second presence sensor (310) comprises a number of ultrasound distance sensors and/or a camera-based distance sensor and/or a LIDAR sensor and/or a RADAR sensor.

6. Vehicle control system (100, 200, 300) according to any one of the preceding claims 4 or 5, wherein the vehicle movement controller (103, 203, 303) comprises a steering controller that is configured to control the steering of the vehicle (208, 308, 408), wherein the steering controller is configured to control the vehicle (208, 308, 408) during a backwards movement of the vehicle (208, 308, 408), that is initiated by the vehicle movement controller (103, 203, 303), to swerve to avoid the rear-positioned vehicle (391, 491) and/or object if a rear-positioned vehicle (391, 491) and/or object is detected behind the vehicle (208, 308, 408).

7. Vehicle control system (100, 200, 300) according to any one of the preceding claims, comprising an alarm device that is coupled to the vehicle movement controller (103, 203, 303), wherein the vehicle movement controller (103, 203, 303) is configured to activate the alarm device if the distance (104, 204, 304, 311) between the vehicle (208, 308, 408) and the front-positioned vehicle (190, 290, 390, 490) decreases below the predetermined threshold (105, 205, 305, 405).

8. Vehicle (208, 308, 408) comprising,
a vehicle control system (100, 200, 300) according to any one of the preceding claims.

9. Method for controlling a vehicle (208, 308, 408), the method comprising:
sensing (S1) the presence and movement of a front-positioned vehicle (190, 290, 390, 490) in front of the vehicle (208, 308, 408) and providing respective first data (102, 202, 302),
determining (S2) based on the first data (102, 202, 302)a change in the distance (104, 204, 304, 311) between the vehicle (208, 308, 408) and the front-positioned vehicle (190, 290, 390, 490) while the vehicle (208, 308, 408) is stopped, and
controlling (S3) the vehicle (208, 308, 408) to move backwards if the distance (104, 204, 304, 311) between the vehicle (208, 308, 408) and the front-positioned vehicle (190, 290, 390, 490) decreases below a predetermined threshold (105, 205, 305, 405).

10. Method according to the preceding method-based claim, wherein sensing comprises sensing the presence and movement with ultrasound distance sensors.

11. Method according to any one of the preceding method-based claims, wherein sensing comprises sensing the presence and movement with a camera-based distance sensor and/or a LIDAR sensor and/or a RADAR sensor.

12. Method according to any one of the preceding method-based claims, comprising sensing the presence and movement of a rear-positioned vehicle (391, 491) and/or an object behind the vehicle (208, 308, 408) and providing respective second data (312), and
comprising determining the distance (311) between the vehicle (208, 308, 408) and the rear-positioned vehicle (391, 491) and/or the object based on the second data (312), and
stopping the backwards movement of the vehicle (208, 308, 408) if the distance (311) is lower than a predetermined safety margin (313).

13. Method according to any one of the preceding method-based claim, wherein sensing the presence and movement of a rear-positioned vehicle (391, 491) and/or an object is performed with a number of ultrasound distance sensors and/or a camera-based distance sensor and/or a LIDAR sensor and/or a RADAR sensor.

14. Method according to any one of the preceding method-based claims 12 and 13, comprising controlling the vehicle (208, 308, 408) during a backwards movement of the vehicle (208, 308, 408), that is initiated if the distance (104, 204, 304, 311) between the vehicle (208, 308, 408) and the front-positioned vehicle (190, 290, 390, 490) decreases below a predetermined threshold (105, 205, 305, 405), to swerve to avoid the rear-positioned vehicle (391, 491) and/or object if a rear-positioned vehicle (391, 491) and/or object is detected behind the vehicle (208, 308, 408).

15. Method according to any one of the preceding method-based claims, comprising activating the alarm device if the distance (104, 204, 304, 311) between the vehicle (208, 308, 408) and the front-positioned vehicle (190, 290, 390, 490) decreases below the predetermined threshold (105, 205, 305, 405).
